# EUROPEAN PATENT APPLICATION

(11) **EP 4 778 968 A1**
(43) Date of publication of application: **22.07.2026**
(21) Application number: 25152960.8
(22) Date of filing: 20.01.2025
(51) Int. Cl.: C08K 3/26, C08K 5/07, C08K 5/1545, C08K 5/17, C08K 5/372

(54) **STABILIZING COMPOSITION FOR HALOGEN-CONTAINING POLYMERS**

(71) Applicant: Reagens S.p.A., 40016 S. Giorgio Di Piano (IT)
(72) Inventor: GARDI, Stefano, 40122 Bologna (IT); SARTI, Gianluca, 47842 San Giovanni in Marignano (IT); BANDINELLI, Claudia, 40068 San Lazzaro di Savena (IT); GIANNONE, Lorenzo, 40018 San Pietro in Casale (IT)
(74) Representative: Cattaneo, Elisabetta

(57) **Abstract**

The present invention relates to a composition for stabilizing halogen-containing polymers and comprising at least one β-diketone, at least one β-aminocrotonate having a molecular weight equal to or greater than 256 g/mol as calculated summing up the mass of the atoms of the chemical structure and at least one hydrotalcite.

## Description

### FIELD OF THE INVENTION

The present invention concerns a stabilized halogen-containing polymer, preferably polyvinylchloride (PVC), obtainable through the use of a stabilizing composition comprising β-diketones, β-aminocrotonates (having a molecular weight equal to or greater than 256 g/mol) and a hydrotalcite.

### STATE OF THE ART

Polyvinyl chloride (PVC) is a well-known commodity plastic with a broad spectrum of properties. It can be rigid, semi-rigid, and flexible. It is widely used in various construction applications, including water, sewage, or drainage pipes and in many extruded profiles. The rigid PVC form has broad acceptance and exhibits a good market growth in major PVC product applications.

However, PVC is thermally unstable at processing temperatures. When PVC is heated to 170-200°C, chlorine and hydrogen in the molecules are eliminated, releasing hydrochloric acid (HCl), which in turn accelerates the thermal degradation process of the number of conjugated double bonds formed during the processing. It also causes the level of colour in the sample to range from yellow to black. HCl can also deteriorate the mechanical, thermal, and physical properties of PVC. Therefore, heat stabilizers are widely used to safeguard the vinyl products at all stages by improving the heat resistance of PVC products at high temperatures, preventing the chain reaction of degradation.

Heavy metal-based heat stabilizers such as lead (Pb)-based products are responsible for a large proportion of products in the heat stabilizer group. These products were widely used for the stabilization in Europe. However, through the regulation (EU) 2023/923 of 3 May 2023 requiring that PVC polymers or copolymers thereof contain < 0.1% by weight of lead and its compounds, the use of Pb has been restricted due to toxicological concerns.

Consequently, considerable efforts have been devoted towards the development of new stabilization systems for PVC processing, which is driven by a desire to move away from stabilizers based on heavy metal.

Tin (Sn)-based stabilizers are now used in Europe and provide good stability and transparency. Lately however, tin (Sn)-based stabilizers are being investigated for their potential reprotoxicity, as well.

Alternative stabilizers to replace Pb-based stabilizers such as calcium zinc (Ca-Zn) and organic based stabilizers (OBSs) have been investigated. Their usage has been increased both in Europe and, in recent years due to economic growth, in emerging markets, as well; producers all over the world are switching to calcium zinc and organic alternatives because of legislation, market pressure, or on a voluntary basis, as they represent the most sustainable alternative. (adapted from Polymers 2022, 14, 133; Gardi, Polici, Gestione degli additivi per plastiche in allegato XIV e XVII del REACH, in "Reach-OSH", Bologna (Italy), 15-16/10/2019)

Despite the stabilizers described above, there is still the need to provide stabilizers capable to lower and/or retard colour variation upon PVC processing under thermal heating.

Therefore, a composition, which is compliant with the effective regulations, and which allows to obtain a high thermal stability for the polymer is yet to be developed.

### SUMMARY OF THE INVENTION

It is an object of the present invention to develop a stabilizing composition able to overcome the issues of the prior art.

The present inventors surprisingly found out that β-diketones, β-aminocrotonates and hydrotalcites act synergistically providing lower and/or retarded colour variation for halogen-containing polymers upon processing under thermal heating.

Therefore, in a first aspect, the present invention relates to a stabilizing composition comprising
- at least one β-diketone of formula: 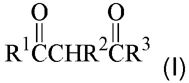 wherein
   R¹ and R³, independently from each other, are (C₁-C₂₂)alkyl; hydroxy(C₅-C₁₀) alkyl; (C₃-C₇)alkenyl; phenyl; phenyl substituted with a substituent selected from the group consisting of hydroxyl, (C₁-C₄)alkyl and halo(C₁-C₄)alkyl; (C₇-C₁₀)alkylphenyl, (Cs-C₁₂)cycloalkyl; (C₅-C₁₂)cycloalkyl substituted with (C₁-C₄)alkyl;
   R² is hydrogen, (C₁-C₈)alkyl, (C₃-C₇)alkenyl, phenyl, phenyl(C₇-C₁₂)alkyl, (C₇-C₁₀)alkyl phenyl; or R² together with one moiety of R¹ and R³, forms a 6-membered ring optionally containing an oxygen atom optionally substituted with at least one substituent selected from the group consisting of (C₁-C₂₂)alkyl and hydroxyl;
- at least one β-aminocrotonate having a molecular weight equal to or greater than 256 g/mol as measured summing up the mass of the atoms of the chemical structure;
- at least one hydrotalcite of general formula

   [M²⁺₁₋ₓM³⁺ₓ(OH)₂]^{x+}[Aⁿ⁻_{x/n}mH₂O]^{x-} (II)

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions
0.2 < x ≤ 0.33 and m is equal or above 0;
in the general formula (II), Aⁿ represents an anion selected from the group consisting of CO₃²⁻, OH⁻, HCO³⁻, ClO⁴⁻, NO³⁻, I⁻, [Fe(CN)₆]⁴⁻, acetate, salicylate, tartrate (bivalent) and oxalate (bivalent).

The inventors hence found out a stabilizing composition comprising a combination of at least one β-diketone, at least one β-aminocrotonate having a molecular weight equal to or greater than 256 g/mol as measured summing up the mass of the atoms of the chemical structure, and at least one hydrotalcite, that is capable to provide low and/or retarded colour variation upon halogen-containing polymer processing under thermal heating.

In a preferred embodiment, the at least one β-diketone is present in an amount from 10 to 40% w/w, more preferably from 20 to 30% w/w; the at least one β-aminocrotonate having a molecular weight equal to or greater than 256 g/mol as measured summing up the mass of the atoms of the chemical structure is present in an amount from 5 to 40% w/w, more preferably from 10 to 30% w/w; and the at least one hydrotalcite is present in an amount from 80 to 20% w/w, more preferably from 60 to 40% w/w relative to one another.

In a further aspect the invention hence concerns a halogenated resin comprising a halogen-containing polymer, preferably polyvinylchloride (PVC), and the stabilizing composition of the invention in an amount in the range from 0.01 to 50 parts by weight, preferably from 0.1 to 30 parts by weight, more preferably from 1 to 15 parts by weight per 100 parts by weight of the halogen-containing polymer (phr).

The halogenated resin of the invention can be in rigid, semirigid and plasticized formulation.

When in the present invention the following terms are used:
- "high molecular weight β-aminocrotonates" is used to refer to β-aminocrotonates having molecular weight equal to or greater than 256 g/mol as calculated summing up the mass of the atoms of the chemical structure;
- "halogen-containing polymer" means vinyl chloride polymers, including homopolymers, chlorinated polyvinyl chloride (C-PVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylic butadiene-styrene (ABS), methacrylate-butadiene-styrene (MBS), acrylonitrile butadiene (NBR), styrene-acrylonitrile (SAN), chlorinated polyethylene (CPE), polyalkylacrylate (PAA), polyalkylmethacrylate (PAMA), polyamides, polylactones;
- "Halogenated resin in plasticized formulation" or "halogenated resin in semirigid formulation" it is meant a resin comprising the halogen-containing polymer formulated with a certain amount of plasticizer compounds;
- "Halogenated resin in rigid formulation", it is meant a resin formulation comprising the halogen-containing polymer and substantially free of plasticizer compounds.

It was surprisingly found out that the combination of at least one β-diketone, at least one high molecular weight β-aminocrotonate, and at least one hydrotalcite according to the preferred aspects detailed above has a surprising stabilizing effect, providing lower and/or retarded colour variation upon processing under thermal heating, when formulated with a halogen-containing polymer, preferably polyvinylchloride (PVC), with respect to their single use.

In an advantageous and preferred aspect, the at least one β-diketone is present in the composition of the invention in an amount from 0.1 to 1 parts by weight with respect to 100 parts of the halogen-containing polymer, preferably PVC.

In an advantageous and preferred aspect, the at least one β-aminocrotonate having a molecular weight equal to or greater than 256 g/mol as measured summing up the mass of the atoms of the chemical structure is present in the composition of the invention in an amount from 0.1 to 1 parts by weight with respect to 100 parts of the halogen-containing polymer, preferably PVC.

In an advantageous and preferred aspect, the at least one hydrotalcite is present in the resin formulation of the invention in an amount from 0.1 to 2 parts by weight with respect to 100 parts by weight of the halogen-containing polymer, preferably PVC.

In another aspect the invention relates to the use of the composition of the invention for stabilizing polyvinylchloride.

### DETAILED DESCRIPTION OF THE INVENTION

The present invention concerns, in a first aspect, a stabilizing composition comprising
- at least one β-diketone of formula: 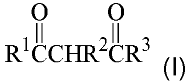 wherein
   R¹ and R³, independently from each other, are (C₁-C₂₂)alkyl; hydroxy(C₅-C₁₀) alkyl; (C₃-C₇)alkenyl; phenyl; phenyl substituted with a substituent selected from the group consisting of hydroxyl, (C₁-C₄)alkyl and halo(C₁-C₄)alkyl; (C₇-C₁₀)alkylphenyl, (Cs-C₁₂)cycloalkyl; (C₅-C₁₂)cycloalkyl substituted with (C₁-C₄)alkyl;
   R² is hydrogen, (C₁-C₈)alkyl, (C₃-C₇)alkenyl, phenyl, phenyl(C₇-C₁₂)alkyl, (C₇-C₁₀)alkyl phenyl; or R² together with one moiety of R¹ and R³, forms a 6-membered ring optionally containing an oxygen atom optionally substituted with at least one substituent selected from the group consisting of (C₁-C₂₂)alkyl and hydroxyl;
- at least one β-aminocrotonate having a molecular weight equal to or greater than 256 g/mol as measured summing up the mass of the atoms of the chemical structure; and
at least one inorganic compound selected from the group consisting of:
- at least one hydrotalcite of general formula

   [M²⁺₁₋ₓM³⁺ₓ(OH)₂]^{x+}[Aⁿ⁻_{x/n}mH₂O]^{x-} (II)

   wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions
   0.2 < x ≤ 0.33 and m is equal or above 0;
   in the general formula (II), Aⁿ represents an anion selected from the group consisting of CO₃²⁻, OH-, HCO³⁻, ClO⁴⁻, NO³⁻, I-, [Fe(CN)₆]⁴⁻, acetate, salicylate, tartrate (bivalent) and oxalate (bivalent).

Within the scope of the present description and in the subsequent claims, all numerical quantities indicating amounts, parameters, percentages, and so on, are to be intended in all circumstances as preceded by the term "about", unless otherwise stated. With the term "about" it is intended a tolerance of ±5% on the number.

Furthermore, all ranges of numerical quantities include all possible combinations of the maximum and minimum numerical values and all possible intermediate ranges, in addition to those specifically indicated below.

The composition according to the invention hence comprises at least one β-diketone of formula: 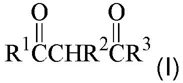 wherein
R¹ and R³, independently from each other, are (C₁-C₂₂)alkyl; hydroxy(C₅-C₁₀) alkyl; (C₃-C₇)alkenyl; phenyl; phenyl substituted with a substituent selected from the group consisting of hydroxyl, (C₁-C₄)alkyl and halo(C₁-C₄)alkyl; (C₇-C₁₀)alkylphenyl, (Cs-C₁₂)cycloalkyl; (C₅-C₁₂)cycloalkyl substituted with (C₁-C₄)alkyl;
R² is hydrogen, (C₁-C₈)alkyl, (C₃-C₇)alkenyl, phenyl, phenyl(C₇-C₁₂)alkyl, (C₇-C₁₀)alkyl phenyl; or R² together with one moiety of R¹ and R³, forms a 6-membered ring optionally containing an oxygen atom optionally substituted with at least one substituent selected from the group consisting of (C₁-C₂₂)alkyl and hydroxyl. Preferably R¹ and R³, independently from each other, are (C₁-C₂₂)alkyl or phenyl. Preferably R² is hydrogen.

In a preferred embodiment R² together with one moiety of R¹ and R³ forms a 6-membered ring optionally containing an oxygen atom, more preferably optionally substituted with at least one substituent selected from the group consisting of hydroxyl. Particularly preferred β-diketones are

| Compounds | name | Formula |
|---|---|---|
| **(1)** | dibenzoyl methane | 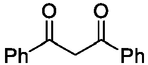 |
| **(2)** | stearoyl-benzoyl methane | 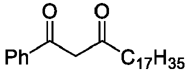 |
| **(3)** | 1-phenyldecane-1,3-dione | 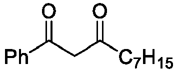 |
| **(4)** | dehydroacetic acid | 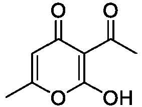 |
| **(5)** | acetylacetone | 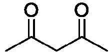 |

The preferred β-diketones can also be present in the composition as salts with bivalent metals, more preferably Ca, Mg and Zn.

β-diketones are present preferably in the range from 0.1 to 10 % w/w, more preferably in the range from 1 to 5 % w/w, still more preferably from 2 to 4 % w/w with respect to the total composition.

The composition comprises at least one β-aminocrotonate having a molecular weight equal to or greater than 256 g/mol as measured summing up the mass of the atoms of the chemical structure.

The at least one β-aminocrotonate having a molecular weight equal to or greater than 256 g/mol as measured summing up the mass of the atoms of the chemical structure is preferably selected from the group consisting of:

| **Compound** | Name (IUPAC, CAS) | Formula |
|---|---|---|
| **(6)** | β-aminocrotonic acid stearyl ester (IUPAC name: octadecyl 3-amino-2-butenoate; CAS 20634-52-0) | 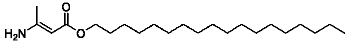 |
| **(7)** | 1,4-butanediol bis(3-aminocrotonate) (IUPAC name: 1,4-butanediyl bis(3-amino-2-butenoate); CAS 14205-47-1) | 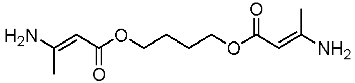 |
| **(8)** | thiodiglycol bis(3-aminocrotonate) (IUPAC name: 2-[2-[3-aminobut-2-enoyl]oxyethylsulfanyl]ethyl-3-aminobut-2-enoate; CAS 13560-49-1) | 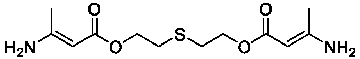 |
| **(9)** | trimethylol propane tri-β-aminocrotonic acid ester (IUPAC name: 2-Butenoic acid, 3-amino-, 2-[[(3-amino-1-oxo-2-butenyl)oxy]methyl]-2-ethyl-1,3-propanediyl ester (9CI); CAS 160187-62-2) | 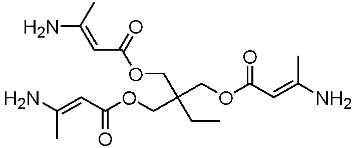 |
| **(10)** | pentaerythritol tetra-β-aminocrotonic acid ester (IUPAC name: 2-Butenoic acid, 3-amino-, 2,2-bis[[(3-amino-1-oxo-2-butenyl)oxy]methyl]-1,3-propanediyl ester (9CI); CAS 51980-23-5) | 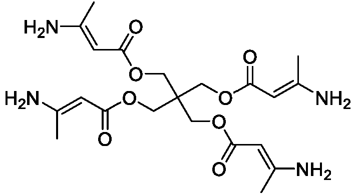 |
| **(11)** | dipentaerythritol hexa-β-aminocrotonic acid ester (IUPAC name: 2-Propenamide, *N,N*'-[[2-[[3-[[(1-oxo-2-propen-1-yl)amino]methoxy]-2,2-bis[[[(1-oxo-2-propen-1-yl)amino]meth oxy] methyl]propoxy]methyl]-2-[[[(1-oxo-2-propen-1-yl)amino]methoxy]methyl]-1,3-propanediyl]bis(oxymethylene)]bis- (ACI); CAS 1427563-41-4) | 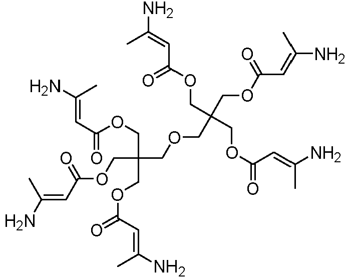 |
| **(12)** | 3-amino-2-butenoic acid dodecyl ester (IUPAC name: dodecyl 3-amino-2-butenoate; CAS 43107-10-4) | 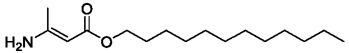 |

Particularly preferred are β-aminocrotonic acid stearyl ester **(6),** 1,4-butanediol bis(3-aminocrotonate) **(7),** thiodiglycol bis(3-aminocrotonate) **(8)** and 3-amino-2-butenoic acid dodecyl ester **(12).**

The at least one β-aminocrotonate having a molecular weight equal to or greater than 256 g/mol as measured summing up the mass of the atoms of the chemical structure is preferably in an amount in the range from 0.1 to 10% w/w, more preferably 1 to 5% w/w, still more preferably 2 to 4% w/w with respect to the total amount of the composition.

The composition comprises at least one hydrotalcite of general formula

[M²⁺₁₋ₓM³⁺ₓ(OH)₂]^{x+}[Aⁿ-_{x/n}mH₂O]^{x-} (II)

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions
0.2 < x ≤ 0.33 and m is equal or above 0;
in the general formula (II), Aⁿ represents an anion selected from the group consisting of CO₃²⁻, OH-, HCO³⁻, ClO⁴⁻, NO³⁻, I-, [Fe(CN)₆]⁴⁻, acetate, salicylate, tartrate (bivalent) and oxalate (bivalent).

Preferably, the at least one hydrotalcite is selected from the group of hydrotalcites of the general formula (II), wherein M²⁺ represents at least one bivalent metal cation of the group consisting of Mg²⁺ and Zn²⁺, M³⁺ represents Al³⁺; A"- is selected from the group consisting of CO₃²⁻ and ClO₄⁻; x is comprised in the range from 0.25 to 0.33; and m is in the range of 0-20.

More preferably the at least one hydrotalcite is selected from the group consisting of [Al₂Mg₆(OH)₁₆]CO₃·4H₂O (CAS 11097-59-9) **(13),** Al₂Mg_{3.5}Zn_{0.5}(OH)₁₂CO₃·3H₂O (CAS 169314-88-9) **(14),** Mg₄Al₂(OH)₁₂(CO₃)_{0-0.75}(ClO₄)_{0.5-2.0} (CAS 212455-49-7) **(15),** and Mg₃ZnAl₂(OH)₁₂CO₃·3H₂O (CAS 169314-88-9) **(16).**

The at least one hydrotalcite is preferably in an amount in the range from 0.1 to 20% w/w, more preferably 1 to 15% w/w, still more preferably 5 to 10% w/w with respect to the total amount of the composition.

The inventors hence found out a stabilizing composition comprising a combination of at least one β-diketone, at least one β-aminocrotonate having a molecular weight equal to or greater than 256 g/mol as measured summing up the mass of the atoms of the chemical structure and at least one hydrotalcite as above reported, that is capable to provide lower and/or retarded colour variation upon halogen-containing polymer processing under thermal heating.

The stabilizing composition according to the invention can be prepared by mixing all the ingredients together or by firstly mixing one or more ingredients and then adding to these latter the remaining ingredients.

The at least one β-diketone, at least one β-aminocrotonate having a molecular weight equal to or greater than 256 g/mol as measured summing up the mass of the atoms of the chemical structure and at least one hydrotalcite can be part of different sub-compositions that are mixed with the halogen-containing polymer for the preparation of the final resin.

In a further aspect the invention hence concerns a halogenated resin comprising a halogen-containing polymer, preferably polyvinylchloride (PVC), and the stabilizing composition of the invention.

Preferably the composition is present in the resin formulation in a total amount in the range from 0.01 to 50 parts by weight, preferably 0.1 to 30 parts by weight, more preferably from 1 to 15 parts by weight per 100 parts by weight of polymer (phr).

In a further aspect, the at least one β-diketone is present in the resin formulation of the invention in an amount from 0.01 to 10 parts by weight, preferably in the range from 0.1 to 5, with respect to 100 parts by weight of the halogen-containing polymer, preferably PVC.

In an advantageous and preferred aspect, the at least one β-diketone is present in the resin formulation of the invention in an amount from 0.1 to 1 parts by weight with respect to 100 parts by weight of the halogen-containing polymer, preferably PVC.

In a further aspect, the at least one β-aminocrotonate having a molecular weight equal to or greater than 256 g/mol as measured summing up the mass of the atoms of the chemical structure is present in the resin formulation of the invention in an amount from 0.01 to 10 parts by weight, preferably in the range from 0.1 to 5, with respect to 100 parts by weight of the halogen-containing polymer, preferably PVC.

In an advantageous and preferred aspect, the at least one β-aminocrotonate having a molecular weight equal to or greater than 256 g/mol as measured summing up the mass of the atoms of the chemical structure is present in the resin formulation of the invention in an amount from 0.1 to 1 parts by weight with respect to 100 parts by weight of the halogen-containing polymer, preferably PVC.

In a further aspect, the at least one hydrotalcite is present in the resin formulation of the invention in an amount from 0.01 to 10 parts by weight, preferably in the range from 0.1 to 5, with respect to 100 parts by weight of the halogen-containing polymer, preferably PVC.

In an advantageous and preferred aspect, the at least one hydrotalcite is present in the resin formulation of the invention in an amount from 0.1 to 2 parts by weight with respect to 100 parts by weight of the halogen-containing polymer, preferably PVC. The halogenated resin of the invention can be in rigid, semirigid and plasticized formulation.

It was surprisingly found out that the combination of at least one β-diketone, at least one β-aminocrotonate having a molecular weight equal to or greater than 256 g/mol as measured summing up the mass of the atoms of the chemical structure and at least one hydrotalcite has a surprising stabilizing effect when formulated with PVC with respect to their single use.

The stabilizing composition comprised in the resin formulation of the invention can also comprise one or more stabilizers and co-stabilizers.

The optional stabilizers or co-stabilizers can be present in the composition of the first aspect of the invention or can be present in the resin formulation.

The optional stabilizers or co-stabilizers can be selected from the group consisting of organotin compounds, metal soaps, perchlorates and perfluoroalkanesulphonates, disodium adipate, antioxidants, alkanolamines, polyols, organic phosphites, and organic co-stabilizers such as dihydropyridines, polydihydropyridines and uracil derivatives.

The optional stabilizer is preferably comprised in the resin in an amount in the range from 0.05 to 15 parts by weight per 100 parts by weight of the halogen-containing polymer, preferably PVC.

The following can be cited as non-limiting examples of stabilizers.

### Organotin compounds

Organotin compounds are a particularly well known and extensively used class of metal-containing thermal stabilizers for halogenated vinyl polymers. Compounds containing one or more tetravalent tin atoms, each of which has at least one direct tin-carbon bond, belong to this class. A preferred class of tin-containing thermal stabilizers shows one or more tetravalent tin atoms, each of which has at least one direct tin-oxygen or tin-sulphur bond, i.e. containing the group:

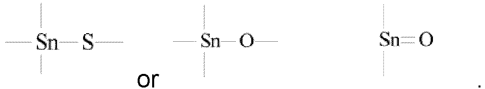

The organotin compounds preferred in the invention comprise those containing one or more tetravalent tin atoms having at least one direct tin-carbon bond and in which the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or hydrohalogen acid, with the proviso that at least one valency is satisfied by a bond with oxygen or sulphur or a mixture of the two. Examples of compounds of this kind are: alkyl tin mercaptides, the product of reacting an organotin halide with a sulphur of an alkali metal and mercaptide, mercaptoacid ester, mercaptoalcohol, mercaptoalcohol ester or mixtures thereof.

Another class of tin-containing stabilizers included in the present invention is the class of compounds not containing sulphur, wherein the tin is bound to oxygen. This group includes, by way of non-limiting example, dibutyltin maleate, dibutyltin di(stearyl maleate), dioctyltin maleate, organotin carboxylates or organotin alkoxides.

The stabilizing composition of the present invention can comprise organotin compounds preferably in an amount in the range from 0.1 to 4 parts by weight, more preferably from 0.15 to 2.0 parts by weight, per 100 parts by weight of polymer.

### Metal soaps

All metal soaps known for use with a halogen-containing polymer as polyvinyl chloride (PVC) stabilizers are suitable for the invention. These are preferably organic sodium, lithium, potassium, calcium, zinc, magnesium and aluminium salts of saturated C₂-C₂₂ aliphatic carboxylates, unsaturated C₂-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, unsubstituted or substituted with at least one OH group and/or substituted with C₁-C₁₆ alkyl, naphthylcarboxylates, unsubstituted or substituted with at least one OH group and/or substituted with C₁-C₁₆ alkyl, phenyl-(C₁-C₁₆)alkylcarboxylates, naphthyl-(C₁-C₁₆)alkylcarboxylates, or phenolates, unsubstituted or substituted with C₁-C₁₂ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl-4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, oxalic acid, salicylic acid, phthalic acid, isophthalic acid, terephthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP 3275570; and colophonic acids (rosin acids such as abietic acid), and superbasic carboxylates.

Metal soaps preferred in the present invention are metal carboxylates of a carboxylic acid containing from 2 to 25 carbon atoms, being typically, acetates, benzoates, or alkanoates, and preferably C₈-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing sodium, zinc and/or calcium soaps.

Zn, Li, K, Mg, Ca, Na salts of the stated fatty acids containing from 2 to 25 carbon atoms are preferably added to the resin or to the composition/product of the invention.

### Perchlorates and perfluoroalkanesulphonates

The polymer stabilizing composition can also comprise a compound selected from the group consisting of M(ClO₄)ₖ and M(CF₃SO₃)ₙ in which M is selected from the group consisting of H⁺, Li⁺, Na⁺, K⁺, Mg²⁺, Ca²⁺, Ba²⁺, Zn²⁺, Al³⁺ and NH₄⁺, and k and n are 1, 2 or 3 depending on the valency of M.

M is preferably selected from the group consisting of Li⁺, Na⁺, K⁺, Mg²⁺, Ca²⁺ and Zn²⁺, more preferably M is selected from the group consisting of Na⁺, K⁺ and Ca²⁺, and still more preferably it is sodium.

In case of use of a compound of formula M(CF₃SO₃)ₙ, this is preferably trifluoromethanesulphonic acid or a sodium salt thereof, more preferably it being sodium trifluoromethanesulphonate.

Preferred for the purposes of the invention is the use of perchloric acid or perchlorate salts. These can be used in various forms, for example preparations such as salts or aqueous or organic solutions, supported on various materials such as PVC, calcium silicate, zeolites or hydrotalcites or bound to a hydrotalcite by chemical reaction. Furthermore, the preferred perchlorates of the invention are complexes of metal perchlorate, more preferably sodium perchlorate, with triethylene glycol, butyldiglycol or polyethylene glycol.

### Antioxidants

The organic antioxidants used in the present invention are selected from those already known as additives for plastic materials. For the purposes of the invention, preferred are one or more antioxidants selected from the group consisting of alkylidene-bisphenols, esters of β-(3,5-di-*tert*-butyl-4-hydroxyphenyl)propionic acid with mono- or poly-alcohols, esters of β-(5-*tert*-butyl-4-hydroxy-3-methylphenyl)propionic acid with mono- or poly-alcohols, esters of β-(3,5-dicyclohexyl-4-hydroxyphenyl)propionic acid with mono- or poly-alcohols.

Particularly preferred according to the invention are 2,2'-methylene-bis(6-*tert*-butyl-4-methylphenol), commercially available as Lowinox^{®} 22 M46 produced by Chemtura, and esters of β-(3.5-di-*tert*-butyl-4-hydroxyphenyl)propionic acid with octadecanol and with pentaerythritol, respectively Arenox^{®} A76 and Arenox^{®} A10, produced by Reagens, and bisphenol A.

The aforedescribed antioxidants, if present, are preferably included in an amount within the range from 0.01 to 1.0 parts by weight, more preferably from 0.1 to 0.5 parts by weight, per 100 parts by weight of PVC.

### Organic co-stabilizers

The invention also provides for the optional presence of organic co-stabilizers in the composition of the invention to further increase the effectiveness of the stabilizing composition. The organic co-stabilizers optionally present in the stabilizing composition of the invention can be preferably one or more compounds selected from dihydropyridines, polydihydropyridines, and uracil derivatives.

The uracil derivatives advantageously present in the composition of the invention are described by general formula (III): 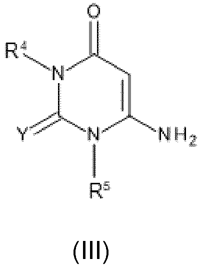 wherein:
R⁴ and R⁵ are, independently of one another, hydrogen, C₁-C₁₂ alkyl, C₃-C₆ alkenyl, C₅-C₈ cycloalkyl optionally substituted with 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with 1 to 3 C₁-C₄ alkyl, C₁-C₄ alkoxy, C₅-C₈ cycloalkyl or hydroxyl or
with chlorine atoms; Y can be oxygen or sulphur.

Examples of C₁-C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl.

Examples of C₁-C₄ alkoxy are methoxy, ethoxy, propoxy, isopropoxy, butoxy, isobutoxy. Examples of C₅-C₈ cycloalkyl are cyclopentyl, cyclohexyl, cycloheptyl, cyclooctyl.

Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably selected from chlorine, hydroxyl, methyl or methoxy. Examples of C₃-C₆ alkenyl are allyl, methallyl, 1-butenyl, or 1-hexanyl, preferably allyl. Preferred are the compounds of the aforestated formula, in which R⁴ and R⁵ are, each independently of the other, C₁-C₄ alkyl and hydrogen; in particular, the compound in which R⁴ and R⁵ are methyl is preferred.

Among the uracil derivatives there can also be optionally present in the composition of the invention oligomeric or polymeric derivatives of formula (III'): 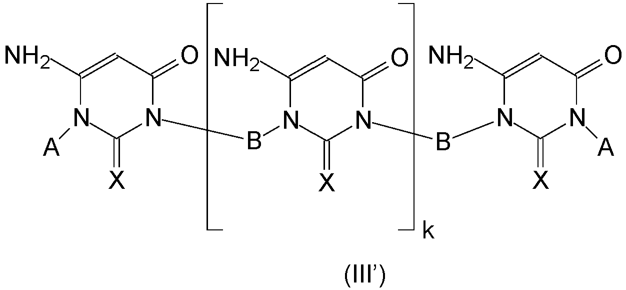 wherein:
A is n-octyl, n-octadecyl, oleyl, phenyl, cyclohexyl or 3-hydroxyphenyl and
B is hexamethylene, 3-methylene-3,5,5-trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic co-stabilizers can be present preferably in an amount within the range from 0.01 to 1.0 parts by weight, in particular from 0.1 to 0.5 parts by weight, per 100 parts by weight of the halogen-containing polymer.

### Mercaptans

The invention also provides for the optional presence of mercaptans in the composition of the invention to further increase the effectiveness of the stabilizing composition. Preferably, the at least one mercaptan optionally present is selected from the group consisting of:

| Name (IUPAC, CAS) | Formula |
|---|---|
| pentaerythritol tetrakis(2-mercaptoacetate) (IUPAC name: [3-(2-sulfanylacetyl)oxy-2,2-bis[(2-sulfanylacetyl)oxymethyl]propyl] 2-sulfanylacetate; CAS 10193-99-4) | 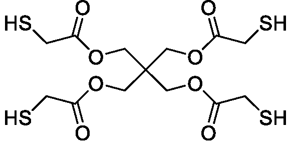 |
| iso-tridecyl 3-mercaptopropionate (IUPAC name: 11-methyldodecyl 3-sulfanylpropanoate; CAS 1040871-35-9) | 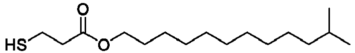 |
| ethylene glycol bis(2-mercaptoacetate) (IUPAC name: 1,2-ethanediyl bis(sulfanylacetate); CAS 123-81-9) | 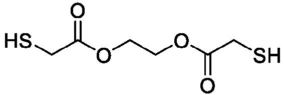 |
| ethylene glycol bis(3-mercaptopropionate) (IUPAC name: 2-[(3-sulfanylpropanoyl)oxy]ethyl 3-sulfanylpropanoate; CAS 22504-50-3) | 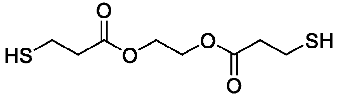 |
| iso-octyl 3-mercaptopropionate (IUPAC name: 2-methylheptyl 3-sulfanylpropanoate; CAS 30374-01-7) | 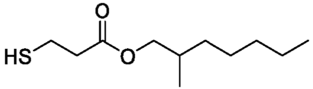 |
| octadecyl 3-mercaptopropionate (IUPAC name: octadecyl 3-sulfanylpropanoate; CAS 31778-15-1) | 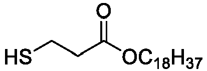 |
| trimethylolpropane tris(3-mercaptopropionate) (IUPAC name: 2,2-bis({[(3-sulfanylpropanoyl)oxy]methyl})butyl 3-sulfanylpropanoate; CAS 33007-83-9), | 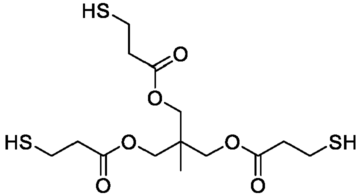 |
| ethoxylated trimethylolpropane tris(3-mercaptopropionate) (IUPAC name: 2-[2,2-bis[2-(3-sulfanylpropanoyloxy)ethoxymethyl]butoxy]ethyl 3-sulfanylpropanoate; CAS 345352-19-4) | 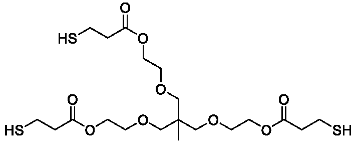 |
| tris[2-(3 mercaptopropionyloxy)ethyl] isocyanurate (IUPAC name: 2-[2,4,6-trioxo-3,5-bis[2-(3-sulfanylpropanoyloxy)ethyl]-1,3,5-triazinan-1-yl]ethyl 3-sulfanylpropanoate; CAS 36196-44-8), | 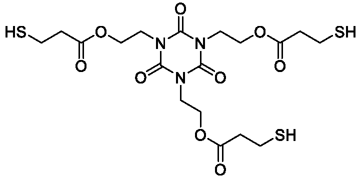 |
| 2-ethylhexyl 3-mercaptopropionate (IUPAC name: 2-ethylhexyl 3-sulfanylpropanoate; CAS 50448-95-8) | 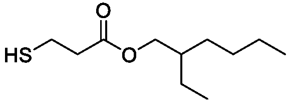 |
| tall oil fatty acids 2-mercaptoethyl esters (CAS 68440-24-4) | 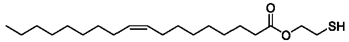 |
| pentaerythritol-tetrakis(3-mercaptopropionate) (IUPAC name: 3-[(3-sulfanylpropanoyl)oxy]-2,2-bis({[(3-sulfanylpropanoyl)oxy]methyl})propyl 3-sulfanylpropanoate CAS 7575-23-7) | 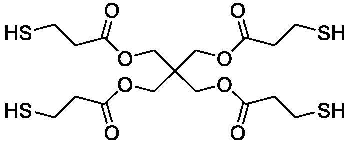 |
| dipentaerythritol hexa (3-mercapto propionate) (IUPAC name: 3-{3-[(3-sulfanylpropanoyl)oxy]-2,2-bis({[(3-sulfanylpropanoyl)oxy]methyl})propoxy}-2,2-bis({[(3-sulfanylpropanoyl)oxy]methyl})propyl 3-sulfanylpropanoate; CAS 25359-71-1) | 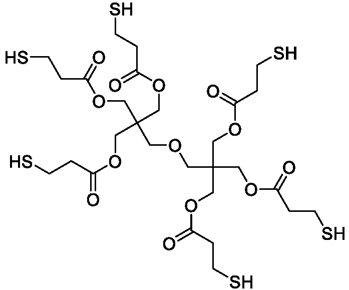 |

### Alkanolamines

Alkanolamines, advantageously present in the composition of the invention and in the final resin of the invention, are compounds of general formula (IV): 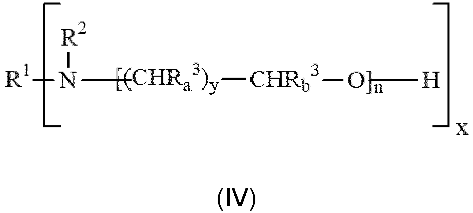 wherein
x = 1, 2, 3;
y = 1, 2, 3, 4, 5 or 6;
n is from 1 to 10
R¹ and R² are independently H, C₁-C₂₂ alkyl, 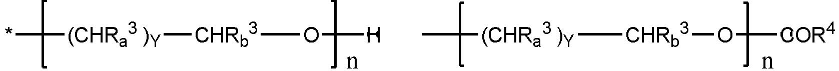
C₂-C₂₀ alkenyl, C₂-C₁₈ acyl, C₄-C₈ cycloalkyl, which can also be hydroxyl-substituted in position β, C₆-C₁₀ aryl, C₇-C₁₀ arylalkyl or alkylaryl, or
if x = 1, then R¹ and R² can be additionally combined with nitrogen to form a cyclo of 4-10 carbon atoms and optionally up to 2 heteroatoms, or
if x = 2, then R¹ can additionally be C₂-C₁₈ alkylene, which can be hydroxyl-substituted at both carbon atoms in β and/or can be interrupted by one or more NR groups;
Rₐ³, R_{b}³ are independently C₁-C₂₂ alkyl, C₂-C₆ alkenyl, C₆-C₁₀ aryl, H or CH₂-X-R⁵, where X is oxygen, sulphur, -O-CO- or CO-O-;
R⁴ is C₁-C₁₈ alkyl, alkenyl or phenyl and
R⁵ is H, C₁-C₂₂ alkyl, C₂-C₂₂ alkenyl, or C₆-C₁₀ aryl.

Preferred trialkanolamines of general formula (IV) are those in which Rₐ³, R_{b}³ are, each independently of the other, H or methyl, and y = 1.

Other alkanolamines are diamines of general formula (V): 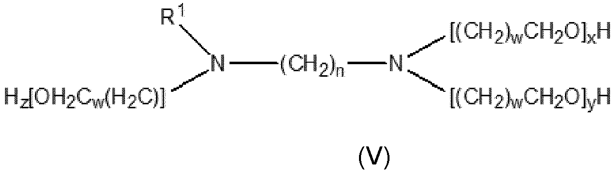 wherein:
n is an integer from 3 to 4, x, y, z are independently of each other an integer from 1 to 20, w is an integer from 1 to 2, R¹ is a C₈-C₂₀ hydrocarbon residue of a compound selected from the group consisting of tallow, cottonseed oil, soya bean oil, and coconut oil. The diamine (V) of the invention is advantageously N,N',N'-tris(3-hydroxypropyl)-N-coco-alkyl-1.3-propanediamine, N,N,N'-(2-hydroxyethyl)-N'-C₁₂₋₁₈-alkyl-1,3-propanediamine, N,N',N'-tris-(2-hydroxyethyl)-N-tallow-alkyl-1,3-propanediamine, N,N',N'-polyoxyethylene(15)-N-tallow-alkyl-1,3-propanediamine, or N,N',N'-tris(2-hydroxyethyl)-N-coco-alkyl-1,3-propanediamine.

Examples of preferred alkanolamines according to the general formula are: tri(hydroxyethyl)amine, tri(hydroxypropyl)amine.

The aforedescribed alkanolamines can be present preferably in an amount within the range from 0.01 to 1.0 parts by weight, in particular from 0.1 to 0.5 parts by weight, per 100 parts by weight of polymer and are preferably used in combination with perchlorates and perfluoroalkanesulphonates.

### Polyols

Among the polyols, optionally present in the composition of the invention, the following are preferred:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-α-D-glycopyranosyl-D-mannitol dihydrate.

Most preferred among polyols are tris(hydroxyethyl)isocyanurate (THEIC), pentaerythritol, dipentaerythritol, trimethylolpropane, bistrimethylolpropane, sorbitol. The polyols, if present, are present preferably in an amount within the range from 0.01 to 2 parts by weight, more preferably from 0.1 to 1 parts by weight, per 100 parts by weight of halogen-containing polymer.

### Phosphites

The phosphites, optionally present in the composition of the invention, are preferably organic phosphites of general formula P(OR)₃, in which the radicals R are identical or different and can be C₆-C₁₈ alkyl, C₆-C₁₈ alkenyl, C₅-C₇ cycloalkyl. Also included as preferred in the invention are acid phosphites of general formula P(OH)R₂, in which the radicals R are identical or different and selected from C₆-C₁₈ alkyl, C₆-C₁₈ alkenyl, phenyl, mono- or di-alkylphenyl, or C₅-C₇ cycloalkyl.

Phosphites with the following general formula can also be present in the composition of the invention: 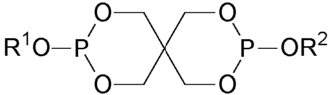 in which R¹ and R² are identical or different and are C₆-C₁₈ alkyl, C₆-C₁₈ alkenyl, phenyl, mono- or di-alkylphenyl, or C₅-C₇ cycloalkyl. Preferred of these latter phosphites are those in which R¹, R² = stearyl or

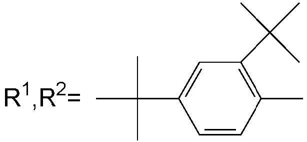

Phosphites with the following general formula can also be present:

(R¹O)₂-PO-R²-OP-(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl. Each C₆-C₁₈ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂₋₁₅ alcohol) phosphite, bis(2,4-di-*tert*-butylphenyl)pentaerythritol diphosphite, distearyl pentaerythritol diphosphite.

The phosphites, if present, are preferably in an amount within the range from 0.1 to 2 parts by weight, more preferably from 0.2 to 0.5 parts by weight, per 100 parts by weight of the halogen-containing polymer, preferably PVC.

In a preferred and advantageous embodiment of the invention, the stabilizing composition comprises stearoylbenzoyl methane, preferably in an amount from 20 to 40% w/w, more preferably 32% w/w with respect to the total amount of the composition, thiodiglycol bis(3-aminocrotonate), preferably in an amount from 5 to 15% w/w, more preferably 9% w/w with respect to the total amount of the composition, and aluminium-magnesium-zinc carbonate-hydroxide (named as Alcamizer P93 CAS 169314-88-9), preferably in an amount from 30 to 50% w/w, more preferably 41% w/w with respect to the total amount of the composition.

Said composition also preferably comprises, as additives: zinc dibenzoate, preferably in an amount from 5 to 15% w/w, more preferably 9% w/w relative to the overall composition with respect to the total amount of the composition, octadecyl 3-(3,5-di-tert-butyl-4-hydroxyphenyl)propionate, preferably in an amount from 5 to 15% w/w, more preferably 9% w/w respect to the total amount of the composition.

The halogenated resin of the invention can be in a rigid, semirigid and plasticized formulation.

The halogenated resin can be a plasticized or semirigid formulation comprising chlorinated polyvinylchloride formulated with plasticizer compounds.

The halogenated resin can be a rigid formulation comprising polyvinylchloride and being substantially free of plasticizer compounds.

The compounds present in the stabilizing composition can be added to the resin formulation by mixing through dry blending. The resin formulation is then used to prepare final articles of PVC. The final products article can be any type of PVC product, which needs enhanced thermal stabilization with little or zero emission of smoke, for example: rigid and semirigid films, sheets, profiles, cables, automotive parts, floorings, roofing, injection molded articles. The finished items may be manufactured by any process available to those of ordinary skill in the art including, but not limited to, extrusion, extrusion blowing, film casting, film blowing, calendering, injection molding, compression molding, thermoforming, spinning, rotational casting, slush molding, plastisol curing.

In another aspect the invention relates to the use of the composition of the invention for stabilizing halogen-containing polymers, preferably polyvinylchloride.

In a preferred aspect the invention relates to the use of the composition of the invention for stabilizing a halogen-containing polymer, preferably in an amount of preferably from 0.01 to 50 parts by weight, preferably 0.1 to 30 parts by weight, more preferably from 1 to 20 parts by weight per 100 parts by weight of polymer (phr).

The invention will be now detailed by illustrative and non-limitative examples.

### EXPERIMENTAL PART

A base formulation of PVC was used in the following examples and hereinbelow reported in Table 1

**Table 1**

| INGREDIENT | AMOUNT (g) |
|---|---|
| Polyvinyl chloride (PVC S K 57)* | 100.00 |
| Methyl methacrylate/ethyl acrylate copolymer** | 0.75 |
| Methyl methacrylate/butyl acrylate/styrene copolymer*** | 1.25 |
| Methyl methacrylate/butadiene/styrene copolymer**** | 6.00 |
| Hydrogenated castor oil | 1.00 |
| Pentaerythritol tetrabehenate***** | 0.50 |
| Oxidized polyethylene wax****** | 0.25 |
| Zinc dibenzoate | 0.25 |
| Octadecyl 3-(3,5-di-tert-butyl-4-hydroxyphenyl) propionate | 0.25 |

| | |
|---|---|
| * PVC with K-value equal to 57 according to ISO 1628-2 purchased from Vynova and available on the market as VYNOVA^{™} S5702 ** Processing aid named as Paraloid^{®} K 120 N purchased from Dow^{®} *** Processing aid named as Paraloid^{®} K 175 purchased from Dow^{®} **** MBS impact modifier named as Paraloid^{®} BTA 736 purchased from Dow^{®} ***** Product named as Loxiol^{®} G78 from Emery^{®} Oleochemicals was used ****** Product named as A-C^{®} 316 from Honeywell^{®} was used | |

The ingredients of the base PVC formulation were provided and mixed with the at least one β-diketone, at least one β-aminocrotonate having a molecular weight equal to or greater than 256 g/mol as measured summing up the mass of the atoms of the chemical structure and at least one hydrotalcite, said compounds in the indicated amounts as reported in the following tables in each example.

The ingredients were homogeneously mixed to prepare PVC formulations.

The PVC formulations were then tested according to tests for the evaluation of thermal stabilization illustrated in the examples.

### EXAMPLES

### Example 1

The ingredients of the base formulation were mixed with the ingredients shown in the following table 2, in the respective amounts. The amounts indicated in the tables 1,2,3 are expressed in phr, meaning weight parts per 100 weight parts of polymer. The stabilized PVC formulations were treated as follows:
The PVC formulations obtained according to the invention were two-roll milled for 3 minutes at 190°C with a two-roll mill model MCC/N 150X300-E from Battaggion^{©} to obtain 0.3-0.5 mm sheets. Rectangular samples (1.5x24 cm) were then cut from each sheet.

Samples were placed in a dynamic rack of a Werner Mathis^{©} oven thermostated at 190°C and were heated. The rack moved outside the oven at a speed of 0.25 cm/min. Colour value b* was evaluated with a colorimeter X-Rite QA2000 according to ASTM D-1925. According to this rule, the lower is b*, the better is the thermal stabilization. The b* value was recorded after heating at 190°C for 12 minutes.

This test of thermal stabilization was representative of the thermal stabilization obtained in the processing of a halogen containing polymer, as it was performed after a two-roll mill calendering process and subsequent high temperature heating.

This set of tests was aimed at highlighting the synergism between stearoyl-benzoyl methane **(2),** 1,4-butanediol bis(3-aminocrotonate) **(7)** and aluminium-magnesium-zinc carbonate-hydroxide **(14).**

Formulations from 1 to 6 were comparative examples and formulation 7 contained the stabilizing compositions according to the invention.

**Table 2: tests for formulations 1-7**

| **COMPOUNDS** | **FORMULATIONS** | | | | | | |
|---|---|---|---|---|---|---|---|
| | 1 | **2** | **3** | **4** | **5** | **6** | **7** |
| **(14)**** | 2.00 | - | - | 1.00 | 1.00 | - | 1.00 |
| **(2)** | - | 2.00 | - | 1.00 | - | 1.00 | 0.50 |
| **(7)** | - | - | 2.00 | - | 1.00 | 1.00 | 0.50 |
| **b*** | 18.42 | burnt | 9.53 | 4.15 | 4.06 | 4.58 | 3.41 |

| | | | | | | | |
|---|---|---|---|---|---|---|---|
| ** Alcamizer P93 (CAS 169314-88-9) | | | | | | | |

From the table 2, it is evident that the composition according to the present invention (7) showed a better thermal stability than the comparative compositions (1-6), comprising either only the β-diketone (2), the β-aminocrotonate (3), the hydrotalcite (1) or a pair of the three components (4-6).

### Example 2

The test was carried out as in example 1 with formulation containing the ingredients of Table 1 added with the ingredients of the formulations shown in the following table 3. This set of tests was aimed at highlighting the synergism between dibenzoyl methane (1), 1,4-butanediol bis(3-aminocrotonate) **(7)** and aluminium-magnesium-zinc carbonate-hydroxide **(14).**

Formulations from 8 to 13 were comparative examples and formulation 14 contained the stabilizing compositions according to the invention.

**Table 3: tests for formulations 8-14**

| **COMPOUNDS** | **FORMULATIONS** | | | | | | |
|---|---|---|---|---|---|---|---|
| | **8** | **9** | **10** | **11** | **12** | **13** | **14** |
| **(14)**** | 2.00 | - | - | 1.00 | 1.00 | - | 1.00 |
| **(1)** | - | 2.00 | - | 1.00 | - | 1.00 | 0.50 |
| **(7)** | - | - | 2.00 | - | 1.00 | 1.00 | 0.50 |
| **b*** | 16.92 | burnt | 6.84 | 5.17 | 4.63 | 4.60 | 3.67 |

| | | | | | | | |
|---|---|---|---|---|---|---|---|
| ** Alcamizer P93 (CAS 169314-88-9) | | | | | | | |

From the table 3, it is evident that the composition according to the present invention (14) showed a better thermal stability than the comparative compositions (8-13), comprising either only the β-diketone (9), the β-aminocrotonate (10), the hydrotalcite (8) or a pair of the three components (11-13).

### Example 3

The test was carried out as in example 1 with formulation containing the ingredients of Table 1 added with the ingredients of the formulations shown in the following table 4. This set of tests was aimed at highlighting the synergism between dehydroacetic acid **(4),** 1,4-butanediol bis(3-aminocrotonate) **(7)** and aluminium-magnesium-zinc carbonate-hydroxide **(14).**

Formulations from 15 to 20 were comparative examples and formulation 21 contained the stabilizing compositions according to the invention.

**Table 4: tests for formulations 15-21**

| **COMPOUNDS** | **FORMULATIONS** | | | | | | |
|---|---|---|---|---|---|---|---|
| | **15** | **16** | **17** | **18** | **19** | **20** | **21** |
| **(14)**** | 2.00 | - | - | 1.00 | 1.00 | - | 1.00 |
| **(4)** | - | 2.00 | - | 1.00 | - | 1.00 | 0.50 |
| **(7)** | - | - | 2.00 | - | 1.00 | 1.00 | 0.50 |
| **b*** | 11.90 | burnt | 6.31 | 5.84 | 3.64 | 4.15 | **3.20** |

| | | | | | | | |
|---|---|---|---|---|---|---|---|
| ** Alcamizer P93 (CAS 169314-88-9) | | | | | | | |

From the table 4, it is evident that the composition according to the present invention (21) showed a better thermal stability than the comparative compositions (15-20), comprising either only the β-diketone (16), the β-aminocrotonate (17), the hydrotalcite (15) or a pair of the three components (18-20).

### Example 4

The test was carried out as follows:
The PVC formulations obtained according to the invention were two-roll milled for 3 minutes at 190°C with a two-roll mill model MCC/N 150X300-E from Battaggion^{©} to obtain 0.3-0.5 mm sheets. Rectangular samples (1.5x24 cm) were then cut from each sheet.

Samples were placed in a dynamic rack of a Werner Mathis^{©} oven thermostated at 190°C and were heated. The rack moved outside the oven at a speed of 0.25 cm/min. Colour value b* was evaluated with a colorimeter X-Rite QA2000 according to ASTM D-1925. According to this rule, the lower is b*, the better is the thermal stabilization. The b* value was recorded after heating at 190°C for 32 minutes.

This test of thermal stabilization was representative of the thermal stabilization obtained in the processing of a halogen containing polymer, as it was performed after a two-roll mill calendering process and subsequent high temperature heating.

The test was carried out with formulation containing the ingredients of Table 1 added with the ingredients of the formulations shown in the following table 5. This set of tests was aimed at highlighting the synergism between stearoyl-benzoyl methane **(2),** thiodiglycol bis(3-aminocrotonate) **(8)** and aluminium-magnesium-zinc carbonate-hydroxide **(14).**

Formulations from 8 to 13 were comparative examples and formulation 14 contained the stabilizing compositions according to the invention.

**Table 5: tests for formulations 22-24**

| **COMPOUNDS** | **FORMULATIONS** | | |
|---|---|---|---|
| | **22** | **23** | **24** |
| **(14)**** | 1.13 | 1.13 | 1.13 |
| **(2)** | 0.88 | - | 0.44 |
| **(8)** | - | 0.88 | 0.44 |
| **b*** | 32.44 | 20.94 | **11.27** |

| | | | |
|---|---|---|---|
| ** Alcamizer P93 (CAS 169314-88-9) | | | |

From the table 5, it is evident that the composition according to the present invention (24) showed a better thermal stability than the comparative compositions (22, 23), comprising only pair of either the β-diketone and the hydrotalcite (22) or a pair of the β-aminocrotonate and the hydrotalcite (23). The synergistic effect is particularly highlighted since the composition according to the present invention (24) showed a colour value b* about half of the colour value b* shown by comparative composition (23) and about a third of the colour value b* of comparative composition (22).

### Example 5

The test was carried out as follows:
The PVC formulations obtained according to the invention were two-roll milled for 3 minutes at 190°C with a two-roll mill model MCC/N 150X300-E from Battaggion^{©} to obtain 0.3-0.5 mm sheets. Rectangular samples (1.5x24 cm) were then cut from each sheet.

Samples were placed in a dynamic rack of a Werner Mathis^{©} oven thermostated at 195°C and were heated. The rack moved outside the oven at a speed of 0.25 cm/min. Colour value b* was evaluated with a colorimeter X-Rite QA2000 according to ASTM D-1925. According to this rule, the lower is b*, the better is the thermal stabilization.

The b* value was recorded after heating at 195°C for 26 minutes.

This test of thermal stabilization was representative of the thermal stabilization obtained in the processing of a halogen containing polymer, as it was performed after a two-roll mill calendering process and subsequent high temperature heating.

The test was carried out with formulation containing the ingredients of Table 1 added with the ingredients of the formulations shown in the following table 6. This set of tests was aimed at highlighting the superiority of β-aminocrotonate having a molecular weight equal to or greater than 256 g/mol as measured summing up the mass of the atoms of the chemical structure.

Formulation 25 was the comparative example, comprising methyl-3-aminocrotonate (CAS 14205-39-1, MW=115.13 g/mol) **(16)** as a low-molecular weight β-aminocrotonate and formulations 26 and 27 contained the stabilizing compositions according to the invention.

**Table 6: tests for formulations 25-27**

| **COMPOUNDS** | **FORMULATIONS** | | |
|---|---|---|---|
| | **25** | **26** | **27** |
| **(14)**** | 1.13 | 1.13 | 1.13 |
| **(2)** | 0.88 | 0.88 | 0.88 |
| **(16)** | 0.25 | - | - |
| **(7)** | - | 0.25 | - |
| **(8)** | - | - | 0.25 |
| **b*** | 2.70 | **0.67** | **1.68** |

| | | | |
|---|---|---|---|
| ** Alcamizer P93 (CAS 169314-88-9) | | | |

From the table 6, it is evident that the compositions according to the present invention (26, 27) showed a better thermal stability than the comparative composition (25), comprising a β-aminocrotonate having a molecular weight lower than 256 g/mol as measured summing up the mass of the atoms of the chemical structure.

In particular, the composition according to the present invention (27) showed a colour value b* about 2/3 of the colour value b* shown by comparative composition (25) and composition according to the present invention (26) showed a colour value b* about a quarter of the colour value b* shown by comparative composition (25).

### Example 6

The test was carried out as follows:
The PVC formulations obtained according to the invention were two-roll milled for 3 minutes at 190°C with a two-roll mill model MCC/N 150X300-E from Battaggion^{©} to obtain 0.3-0.5 mm sheets. Rectangular samples (1.5x24 cm) were then cut from each sheet.

Samples were compression moulded at 180°C for 4 minutes with a Labtech Hydraulic laboratory bench top type LP20-B at 150 bar. Colour value b* was evaluated with a colorimeter X-Rite QA2000 according to ASTM D-1925. According to this rule, the lower is b*, the better is the thermal stabilization.

This test of thermal stabilization was representative of the thermal stabilization obtained in the processing of a halogen containing polymer, as it was performed after a two-roll mill calendering process and subsequent compression at high temperature. The test was carried out with formulation containing the ingredients of Table 1 added with the ingredients of the formulations shown in the following table 7. This set of tests was aimed at highlighting the superiority of β-aminocrotonate having a molecular weight equal to or greater than 256 g/mol as measured summing up the mass of the atoms of the chemical structure.

Formulation 25 was the comparative example, comprising methyl-3-aminocrotonate (CAS 14205-39-1, MW=115.13 g/mol) **(16) as** a low-molecular weight β-aminocrotonate and formulations 26 and 27 contained the stabilizing compositions according to the invention.

**Table 7: high-temperature compression tests for formulations 25-27**

| **COMPOUNDS** | **FORMULATIONS** | | |
|---|---|---|---|
| | **25** | **26** | **27** |
| **(14)**** | 1.13 | 1.13 | 1.13 |
| **(2)** | 0.88 | 0.88 | 0.88 |
| **(16)** | 0.25 | - | - |
| **(7)** | - | 0.25 | - |
| **(8)** | - | - | 0.25 |
| **b*** | 9.83 | **9.17** | **8.06** |

| | | | |
|---|---|---|---|
| ** Alcamizer P93 (CAS 169314-88-9) | | | |

From the table 7, it is evident that the compositions according to the present invention (26, 27) showed a better thermal stability than the comparative composition (25), comprising a β-aminocrotonate having a molecular weight lower than 256 g/mol as measured summing up the mass of the atoms of the chemical structure.

## Claims

1. A stabilizing composition comprising - at least one β-diketone of formula (I): 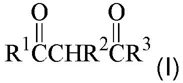 wherein
R¹ and R³, independently from each other, are (C₁-C₂₂)alkyl; hydroxy(C₅-C₁₀) alkyl; (C₃-C₇)alkenyl; phenyl; phenyl substituted with a substituent selected from the group consisting of hydroxyl, (C₁-C₄)alkyl and halo(C₁-C₄)alkyl; (C₇-C₁₀)alkylphenyl, (Cs-C₁₂)cycloalkyl; (C₅-C₁₂)cycloalkyl substituted with (C₁-C₄)alkyl;
R² is hydrogen, (C₁-C₈)alkyl, (C₃-C₇)alkenyl, phenyl, phenyl(C₇-C₁₂)alkyl, (C₇-C₁₀)alkyl phenyl; or R² together with one moiety of R¹ and R³, forms a 6-membered ring optionally containing an oxygen atom optionally substituted with at least one substituent selected from the group consisting of (C₁-C₂₂)alkyl and hydroxyl;
- at least one β-aminocrotonate having a molecular weight equal to or greater than 256 g/mol as measured summing up the mass of the atoms of the chemical structure;
- at least one hydrotalcite of general formula (II)
[M²⁺₁₋ₓM³⁺ₓ(OH)₂]^{x+}[Aⁿ⁻_{x/n}mH₂O]^{x-}
wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions 0.2 < x ≤ 0.33 and m is equal or above 0;
in the general formula (II), Aⁿ represents an anion selected from the group consisting of CO₃²⁻, OH-, HCO³⁻, ClO⁴⁻, NO³⁻, I⁻, [Fe(CN)₆]⁴⁻, acetate, salicylate, tartrate (bivalent) and oxalate (bivalent).

2. The stabilizing composition according to claim 1, wherein the at least one β-diketone has R¹ and R³, independently from each other, selected from (C₁-C₂₂)alkyl and phenyl.

3. The stabilizing composition according to claim 1 or claim 2, wherein in the at least one β-diketone R² is hydrogen.

4. The stabilizing composition according to claim 1 or claim 2, wherein in the at least one β-diketone R² together with one moiety of R¹ and R³ forms a 6-membered ring optionally containing an oxygen atom, preferably optionally substituted with at least one substituent selected from the group consisting of hydroxyl.

5. The stabilizing composition according to claim 1 wherein the at least one β-diketones is selected from the group consisting of:
| Compounds | name | Formula |
|---|---|---|
| **(1)** | dibenzoyl methane | 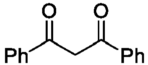 |
| **(2)** | stearoyl-benzoyl methane | 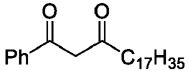 |
| **(3)** | 1-phenyldecane-1,3-dione | 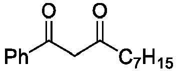 |
| **(4)** | dehydroacetic acid | 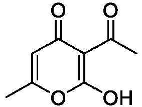 |
| **(5)** | acetylacetone | 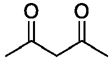 |
and a salt thereof.

6. The stabilizing composition according to anyone of claims 1 to 5, wherein the at least one β-diketone is in amount in the range from 0.1 to 10 % w/w, preferably in the range from 1 to 5 % w/w, more preferably from 2 to 4 % w/w with respect to the total composition.

7. The stabilizing composition according to anyone of claims 1 to 6, wherein the at least one β-aminocrotonate having a molecular weight equal to or greater than 256 g/mol as measured summing up the mass of the atoms of the chemical structure is preferably selected from the group consisting of:
| **Compound** | Name (IUPAC, CAS) | Formula |
|---|---|---|
| **(6)** | β-aminocrotonic acid stearyl ester (IUPAC name: octadecyl 3-amino-2-butenoate; | 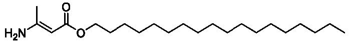 |
| | CAS 20634-52-0) | |
| **(7)** | 1,4-butanediol bis(3-aminocrotonate) (IUPAC name: 1,4-butanediyl bis(3-amino-2-butenoate); CAS 14205-47-1) | 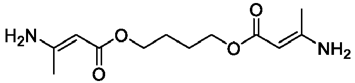 |
| **(8)** | thiodiglycol bis(3-aminocrotonate) (IUPAC name: 2-[2-[3-aminobut-2-enoyl]oxyethylsulfanyl]ethyl-3-aminobut-2-enoate; CAS 13560-49-1) | 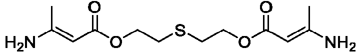 |
| **(9)** | trimethylol propane tri-β-aminocrotonic acid ester (IUPAC name: 2-Butenoic acid, 3-amino-, 2-[[(3-amino-1-oxo-2-butenyl)oxy]methyl]-2-ethyl-1,3-propanediyl ester; CAS 160187-62-2) | 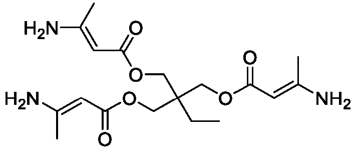 |
| **(10)** | pentaerythritol tetra-β-aminocrotonic acid ester (IUPAC name: 2-Butenoic acid, 3-amino-, 2,2-bis[[(3-amino-1-oxo-2-butenyl)oxy]methyl]-1,3-propanediyl ester; CAS 51980-23-5) | 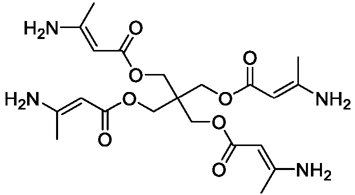 |
| **(11)** | dipentaerythritol hexa-β-aminocrotonic acid ester (IUPAC name: 2-Propenamide, *N,N*'-[[2-[[3-[[(1-oxo-2-propen-1-yl)amino]methoxy]-2,2-bis[[[(1-oxo-2-propen-1-yl)amino]meth oxy] methyl]propoxy]methyl]-2-[[[(1-oxo-2-propen-1-yl)amino]methoxy]methyl]-1,3-propanediyl]bis(oxymethylene)]bis-; CAS 1427563-41-4) | 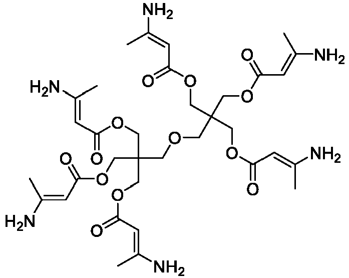 |
| **(12)** | 3-amino-2-butenoic acid dodecyl ester (IUPAC name: 2-Butenoic acid, 3-amino-, dodecyl ester; CAS 43107-10-4) | 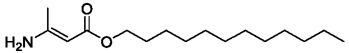 |

8. The stabilizing composition according to anyone of claims 1 to 7, wherein the at least one β-aminocrotonate having a molecular weight equal to or greater than 256 g/mol as calculated summing up the mass of the atoms of the chemical structure is selected from the group consisting of β-aminocrotonic acid stearyl ester **(6),** 1,4-butanediol bis(3-aminocrotonate) **(7),** thiodiglycol bis(3-aminocrotonate) **(8)** and 3-amino-2-butenoic acid dodecyl ester **(12).**

9. The stabilizing composition according to anyone of claims 1 to 8, wherein the at least one β-aminocrotonate having a molecular weight equal to or greater than 256 g/mol as calculated summing up the mass of the atoms of the chemical structure is in an amount in the range from 0.1 to 10% w/w, preferably 1 to 5% w/w, more preferably 2 to 4% w/w with respect to the total amount of the composition.

10. The stabilizing composition according to anyone of claims 1 to 9, wherein the at least one hydrotalcite is selected from the group of hydrotalcites of the general formula (II), wherein M²⁺ represents at least one bivalent metal cation of the group consisting of Mg²⁺ and Zn²⁺, M³⁺ represents Al³⁺; Aⁿ⁻ is selected from the group consisting of CO₃²⁻and ClO₄⁻; x is comprised in the range from 0.25 to 0.33; and m is in the range of 0-20.

11. The stabilizing composition according to anyone of claims 1 to 10, wherein the at least one hydrotalcite is selected from the group consisting of [Al₂Mg₆(OH)₁₆]CO₃·4H₂O (CAS 11097-59-9) **(13),** Al₂Mg_{3.5}Zn_{0.5}(OH)₁₂CO₃·3H₂O (CAS 169314-88-9) **(14),** Mg₄Al₂(OH)₁₂(CO₃)_{0-0.75}(ClO₄)_{0.5-2.0} (CAS 212455-49-7) **(15),** and Mg₃ZnAl₂(OH)₁₂CO₃·3H₂O (CAS 169314-88-9) **(16).**

12. The stabilizing composition according to anyone of claims 1 to 11, wherein the at least one hydrotalcite is in an amount in the range from 0.1 to 20% w/w, preferably 1 to 15% w/w, more preferably 5 to 10% w/w with respect to the total amount of the composition.

13. A stabilizing composition comprising:
- at least one β-diketone, preferably stearoylbenzoyl methane, more preferably in an amount from 20 to 40% w/w, still more preferably 32% w/w with respect to the total amount of the composition;
- at least one β-aminocrotonate, preferably thiodiglycol bis(3-aminocrotonate), more preferably in an amount from 5 to 15% w/w, still more preferably 9% w/w with respect to the total amount of the composition; and
- at least one hydrotalcite, preferably aluminium-magnesium-zinc carbonate-hydroxide (named as Alcamizer P93 CAS 169314-88-9), more preferably in an amount from 30 to 50%, still more preferably 41% w/w with respect to the total amount of the composition.

14. A halogenated resin comprising a halogen-containing polymer and the stabilizing composition according to anyone of claims 1-13.

15. The halogenated resin according to claim 14, wherein the stabilizing composition is present in the resin formulation in a total amount in the range from 0.01 to 50 parts by weight, preferably 0.1 to 30 parts by weight, more preferably from 1 to 15 parts by weight per 100 parts by weight of polymer (phr).

16. The halogenated resin according to claim 14 or 15 wherein the halogenated resin comprises optional stabilizers or co-stabilizers selected from the group consisting of organotin compounds, metal soaps, perchlorates and perfluoroalkanesulphonates, disodium adipate, antioxidants, alkanolamines, polyols, organic phosphites, mercaptans and organic co-stabilizers such as dihydropyridines, polydihydropyridines and uracil derivatives.
